# EUROPEAN PATENT APPLICATION

(11) **EP 2 161 926 A2**
(43) Date of publication of application: **10.03.2010**
(21) Application number: 09010553.7
(22) Date of filing: 17.08.2009
(51) Int. Cl.: H04N 5/44

(54) **Broadcast reception apparatus**

(30) Priority: 04.09.2008 JP 2008226599
(71) Applicant: Funai Electric Co., Ltd., Daito-shi Osaka 574-0013 (JP)
(72) Inventor: Tomita, Tomoaki, Daito-shi, Osaka 574-0013 (JP)
(74) Representative: Beetz & Partner

(57) **Abstract**

A broadcast reception apparatus includes a receiving portion (11) receiving a broadcast signal, an automatic channel-addition portion (1512) additionally registering a receivable channel automatically, an input portion (14) accepting instructions from a user, and a channel-registration canceling portion (1513) for canceling the registration of a channel, so commanded from the input portion (14), to be canceled as a receivable channel and for storing in a memory portion (1542) its channel information as the information of a canceled channel. When the same channel information as that of the unregistered channel is in the channel information stored in the memory portion (1542), the automatic channel-addition portion does not register the unregistered channel as a receivable channel.

## Description

### BACKGROUND OF THE INVENTION

### 1. Field of the Invention

The present invention relates to a broadcast reception apparatus that receives a broadcast signal, and more particularly to a broadcast reception apparatus that has a function of, on detection of a receivable but unregistered channel, additionally registering it as a receivable channel automatically.

### 2. Description of Related Art

Conventionally, television receivers, and video recording appliances such as DVD recorders, are provided with a broadcast reception apparatus for receiving a broadcast signal. As to the configuration of such broadcast reception apparatuses, there have been made various proposals (see, for example, Patent Documents 1 to 5 listed below).

A broadcast reception apparatus that receives a digital broadcast operates as follows. Of a plurality of broadcast waves received via an antenna, a desired wave is selected by a tuner. Then, of one or more channels (also called sub-channels) contained in the desired broadcast wave so selected, a desired channel is selected by demultiplexing. Then the digital signal of the so selected channel is extracted, and is decoded to yield a video signal and an audio signal.

When such a broadcast reception apparatus is installed, usually, as initial setting, an initial channel search is executed, so that receivable channels are registered. Even after initial setting, to cope with a new broadcast station starting operation, a new relay station being set up, a broadcast frequency being changed, etc., it is preferable - so it is considered - to update the registered channels from time to time while no broadcast is being watched such as in a stand-by state (see, for example, Patent Document 1). Some broadcast reception apparatuses furnished with such an automatic channel search function, for example on detecting a channel different from any previously registered channel, additionally registers it automatically.

Broadcast reception apparatuses furnished with an automatic additional channel registration function, however, have been found to suffer from the inconvenience described below.

Channels that are added by the automatic additional channel registration function may include ones with poor reception (those received indeed but yielding images with poor quality etc.). When channels with poor reception are additionally registered, users may be annoyed by their addition, and may cancel the registration of them. Likewise, when channels that do not suit users' preferences are additionally registered automatically, they may cancel the registration of them.

As described above, however, automatic additional channel registration is preferably performed occasionally while no broadcast is being watched such as in a stand-by state, and this design causes channels that a user once canceled its registration to be added again automatically. Thus, with respect to channels that users do not like to be registered in the first place, even if the registration of them are canceled, they are additionally registered again eventually, which the users feel inconvenient.
Patent Document 1: JP-A-2004-186975 Publication
Patent Document 2: JP-A-2008-099028 Publication
Patent Document 3: JP-A-2007-088578 Publication
Patent Document 4: JP-A-2004-320397 Publication
Patent Document 5: JP-A-2003-198965 Publication

### SUMMARY OF THE INVENTION

It is therefore an object of the present invention to provide a broadcast reception apparatus that has a function of additionally registering a channel automatically and yet can choose not to additionally register a channel that does not suit a user's preferences.

To achieve the above object, the invention proposes a broadcaset reception apparatus according to claim 1. A broadcast reception apparatus according to the present invention may comprise a receiving portion receiving a broadcast signal; an automatic channel-addition portion for, on detecting a receivable but unregistered channel, additionally registering it as a receivable channel; an input portion to which instructions from a user is input; and a channel-registration canceling portion for canceling the registration of a channel commanded, from the input portion, to be canceled as a receivable channel, and for storing in a memory portion the channel information of the so canceled channel as the information of a canceled channel. When the same channel information as that of the unregistered channel is in the channel information stored in the memory portion, the automatic channel-addition portion does not register the unregistered channel as a receivable channel.
Here, a "channel" according to the invention is used in its broad sense. Specifically, the "channel" according to the invention not only means a physical channel. For example, there are channels, such as in digital broadcasts, in which one or more sub-channels exist in a physical channel. Thus, the "channel" according to the invention is used in its broad sense including channels such as sub-channels as described above.

With the design according to the invention, the automatic channel-addition portion first compares the channel information of the channel of which the registration has been canceled by a user with the channel information of a newly detected unregistered channel, and then determines whether or not to perform the automatic additional registration of the unregistered channel. In this way, the channel of which the registration has been canceled by a user is not additionally registered automatically, overcoming the inconvenience which the users have felt conventionally.

In the broadcast reception apparatus with the above-described design, it is preferable that a channel searching portion be further provided that executes a search for a receivable channel by use of the receiving portion, and that the execution of the channel search be accompanied by the execution of processing by the automatic channel-addition portion. In this way, it is possible to make use of the automatic channel-addition function on a regular basis or with timing that suits users' preferences. Even in this case, the channel of which the registration has already been canceled by a user is not additionally registered automatically, and thus it is possible to provide broadcast reception apparatuses that offer comfortable reception to the users.

In the broadcast reception apparatus with the above-described design, the channel search by the channel searching portion may be executed automatically with predetermined timing. In this way, if there is an extra receivable channel, it is in principle added automatically without particular operation, which is convenient for the users. In this case also, the channel of which the registration has already been canceled by a user is not additionally registered automatically; thus, it is possible to provide broadcast reception apparatuses that offer even more comfortable reception to the users.

In the broadcast reception apparatus with the above-described design, the broadcast signal may be a digital broadcast signal, and the channel information may be identification information given to, so as to be specific to, each channel by a broadcast station.

According to the invention, in a broadcast reception apparatus that has a function of, on detection of a receivable but unregistered channel, additionally registering it as a receivable channel, a channel of which the registration has already been canceled by a user is not additionally registered automatically. That is, in the broadcast reception apparatus according to the invention, it is possible to avoid the automatic additional registration of channels that do not suit customers' preferences, and thus the apparatus can be used comfortably.

### BRIEF DESCRIPTION OF THE DRAWINGS

Fig. 1 is a block diagram showing the configuration of a broadcast reception apparatus according to the embodiment of the present invention;
Fig. 2 is a block diagram illustrating functions that the broadcast reception apparatus according to the embodiment has; and
Fig. 3 is a flowchart showing a process when a receivable but unregistered channel is detected in the broadcast reception apparatus according to the embodiment.

### DETAILED DESCRIPTION OF PREFERRED EMBODIMENTS

Hereinafter, a broadcast reception apparatus embodying the present invention will be described with reference to the accompanying drawings. In the following description, a digital broadcast reception apparatus receiving a digital signal is taken up as an example of a broadcast reception apparatus according to the invention, and such an embodiment of the invention is dealt with.

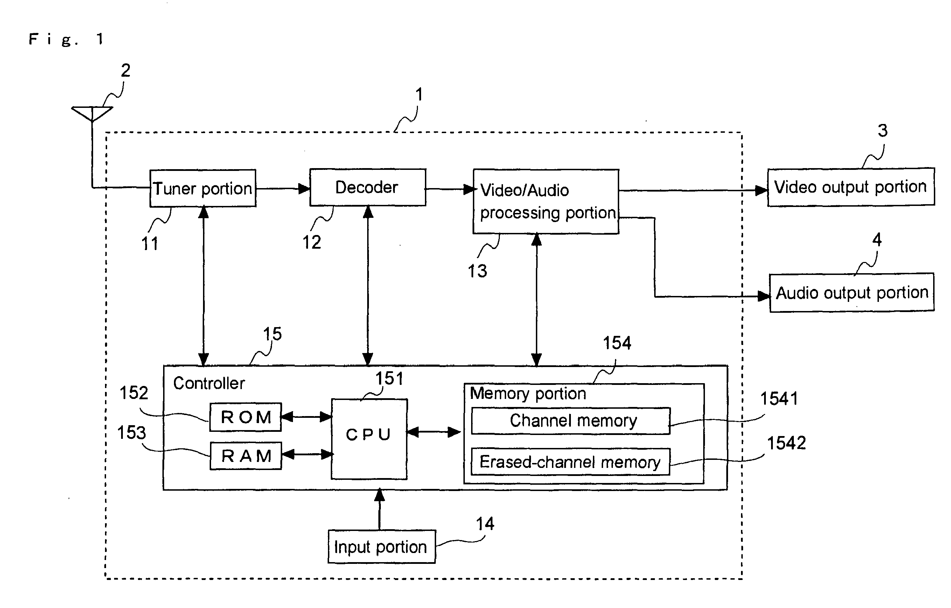

Fig. 1 is a block diagram showing the configuration of the broadcast reception apparatus according to the embodiment. As shown in Fig. 1, the broadcast reception apparatus 1 according to the embodiment comprises a tuner portion 11, a decoder 12, a video/audio processing portion 13, an input portion 14, and a controller 15.

The tuner portion (embodying a receiving portion according to the invention) 11 comprises a tuner, a demodulation circuit, an error-correction circuit, a separation circuit, a demultiplexer, and a buffer memory (none of which is illustrated). Via an antenna 2, a highfrequency broadcast signal (a RF signal) transmitted from a broadcast station is fed to the tuner. The tuner extracts the broadcast signal of a channel (physical channel) specified by the controller 15, and outputs it to the demodulation circuit. The demodulation circuit demodulates the broadcast signal fed to it, and outputs the result to the error-correction circuit. The error-correction circuit corrects erroneous information in a transport stream (TS) fed to it. The separation circuit separates the TS from the signal output from the error-correction circuit, and outputs the TS.

A TS typically has programs of a plurality of channels (these are also called sub-channels, and may include only one channel) multiplexed for transmission, and contains channel information of the sub-channels. The demultiplexer extracts packets of one of those sub-channels. Then, the data contained in the extracted packets is stored in the buffer memory, while the channel information is output to the controller 15.

After receiving an instruction or a permission from the controller 15, the decoder 12 reads, as required, the data stored in the buffer memory in the tuner portion 11. Then, video data and audio data are separated, are both decompressed, and are output to the video/audio processing portion 13.

The video/audio processing portion 13 performs various kinds of processing, such as D/A conversion, on the video data and audio data fed to it from the decoder 12 to produce a video signal and an audio signal. Then, the video signal is output to a video output portion 3, while the audio signal is output to an audio output portion 4. The video output portion 3 is built with, for example a display device provided with a display screen such as a LCD (liquid crystal display) or a PDP (plasma display panel). The audio output portion 4 is built with, for example, a speaker.

An input portion 14 is provided to allow users to give instructions to the broadcast reception apparatus 1. To be specific, the input portion 14 comprises input buttons, a remote control unit, a touch panel, etc. In the embodiment, the input portion 14 can be used for canceling the registration of a channel that is registered in the broadcast reception apparatus as a receivable channel.

The controller 15 comprises a CPU (central processing unit) 151, a ROM (read only memory) 152, a RAM (random access memory) 153, and a memory portion 154.

The CPU 151, by outputting output signals to different blocks, performs centralized control of the overall operation of the broadcast reception apparatus 1. In the broadcast reception apparatus 1 according to the embodiment, the CPU 151 functions particularly as a channel searching means for executing a search for a receivable channel by use of the tuner portion 11; an automatic channel-addition means for, on detecting a receivable but unregistered channel, additionally registering it automatically; and a channel-registration canceling means for canceling the registration of a channel commanded to be canceled as a receivable channel, and for storing in a memory portion the channel information of the so canceled channel as the information of a canceled channel. This will be described later.

The ROM 152 stores various programs that are executed by the CPU 151. The RAM 153 stores processing results produced while various programs are executed by the CPU 151, entered data, etc. The memory portion 154 comprises a channel memory 1541 and an erased-channel memory 1542 that are each build with a non-volatile memory, for example, a EEPROM (electrical erasable and programmable ROM), a flash memory, or the like. The channel memory 1541 is a memory for storing (registering) a receivable channel. The details of the erased-channel memory 1542 will be described later.

The broadcast reception apparatus 1 according to the embodiment is configured as outlined above. The broadcast reception apparatus 1 according to the embodiment is in principle so configured that it, on detection of a channel that is receivable but is unregistered in the channel memory 1541, registers it automatically (adds it to the channel memory 1541 automatically) as a receivable channel. In this series of operation of additionally registering a newly detected unregistered channel automatically, the broadcast reception apparatus according to the embodiment has a distinctive feature. This will be described below.

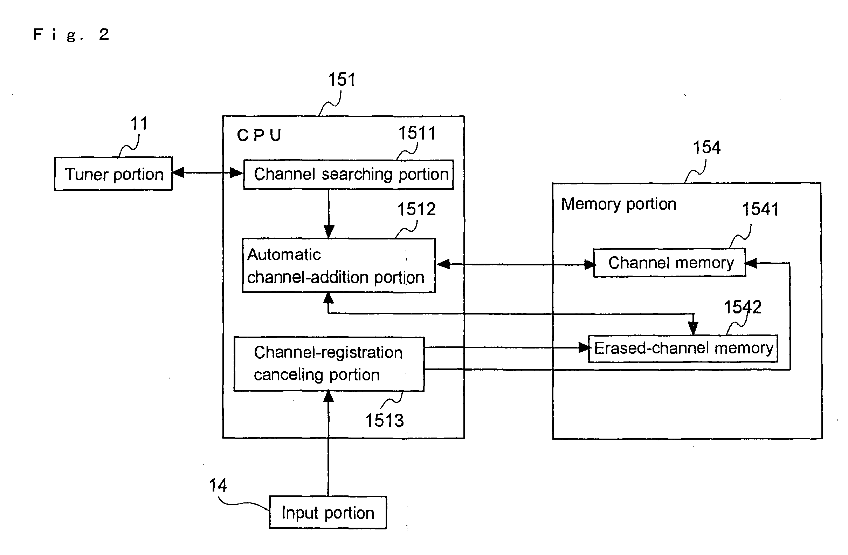

Fig. 2 is a block diagram illustrating the functions that the broadcast reception apparatus 1 according to the embodiment has. As shown in Fig. 2, the CPU 151 comprises a channel searching portion 1511, an automatic channel-addition portion 1512, and a channel registration canceling portion 1513.

The channel searching portion 1511 executes a channel search by use of a tuner portion 11. The channel searching portion 1511 requests the tuner portion 11 to switch the reception frequency from one channel (physical channel) to the next, and meanwhile automatically checks whether or not each channel is receivable. Whether a channel is receivable or not may be judged, for example, by measuring the BER (bit error rate) value observed when the reception frequency of that channel is selected.

With respect to the receivable channels (physical channels), the channel searching portion 1511 collects channel information of the sub-channels contained in each of those physical channels. The channel information collected by the channel searching portion 1511 will now be described with a digital broadcast of the ATSC (Advanced Television Systems Committee) system, which is implemented in countries such as the United States, taken up as an example.

In the digital broadcast of the ATSC system, one or more sub-channels exist in each of physical channels corresponding to different RF frequencies (selection frequencies). Each sub-channel is assigned a virtual channel (hereinafter referred to as the V-CH) number that consists of a channel number with a 4-digit main (major) value corresponding to a physical channel and a channel number with a sub (minor) value.

Moreover, in the digital broadcast of the ATSC system, there are defined a one-part channel and a two-part channel. The one-part channel is similar to the conventional analog television broadcast channel that is specified by a channel number with a main value mentioned above. The two-part channel is a channel specified by a channel number with a main value mentioned above and a channel number with a sub value mentioned above. The sub-channels are each assigned a V-CH number of either a one-part channel - with the sub value of "0" - or a two-part channel. With this V-CH number, a station can be selected and reception can be demodulated.

In the ATSC system, compressed and encoded video and audio of one or more sub-channels are distributed as a digital signal of a transport stream (TS). At the same time, in addition to the video and audio, control information data related to broadcast programs are packetized and transported by the TS. The control information includes a PSIP (Program and System Information Protocol) that has viewing limitations, program information, information on text broadcasting, information on the above-mentioned V-CH, etc. In other words, the PSIP contained in the TS includes identification information specific to each sub-channel. The channel information collected by the channel searching portion 1511 includes information obtained from the PSIP; thus identification information specific to each channel is collected.

With respect to a receivable channel (not a physical channel but a sub-channel here) detected by the channel searching portion 1511, if it has not been registered yet as a receivable channel, the automatic channel-addition portion 1512 in principle registers it. Specifically, for example, the information obtained from the PSIP contained in the TS is analyzed so that a channel table related to the V-CH is created, and this is stored in the channel memory 1541.

As described above, the additional channel registration by the automatic channel-addition portion 1512 is performed only in principle, and there may be a case where the additional registration is not performed even if a receivable but unregistered channel is found. This will be described later.

When the channel search by the channel searching portion 1511 is executed for the first time, no receivable channel has been registered at that stage. Thus, when the channel search is executed for the first time, every receivable channel detected is registered.

The channel-registration canceling portion 1513 has a function of, when a user enters an instruction via the input portion 14 to cancel the registration of a channel that is already registered, canceling the registration. Specifically, the channel-registration canceling portion 1513, on receiving an instruction to cancel the channel registration, erases the registration information stored in the channel memory 1541.

Before erasing the registration of the channel, the channel-registration canceling portion 1513 stores the information of the channel to be erased in the erased-channel memory (embodying a storage portion according to the invention) 1542. The information stored in the erased-channel memory 1542 includes channel specific information (for example, the channel specific identification information included in the PSIP).

A description will now be given of the case mentioned above where the automatic channel-addition portion 1512 does not perform additional registration even if a receivable but unregistered channel has been found. The automatic channel-addition portion 1512, on detecting a receivable but unregistered channel, checks the information stored in the erased-channel memory 1542. Specifically, the automatic channel-addition portion 1512 checks whether or not the same channel information as the channel information of the newly detected receivable channel is in the erased-channel memory 1542. The channel information referred to here is the channel specific identification information given by a broadcast station, for example, the V-CH information included in the PSIP, and the like. When there is no same information, the channel is registered. When there is the same information, the channel is not registered, i.e., not additionally registered automatically.

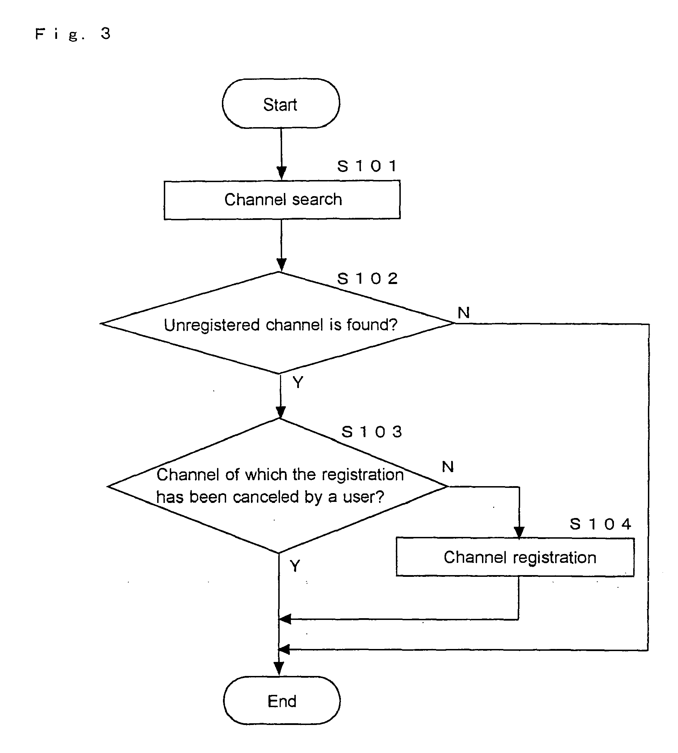

Next, with reference to the flowchart shown in Fig. 3, a flow of operation for, on detection of a channel that is receivable but unregistered, additionally registering it as a receivable channel automatically in the broadcast reception apparatus 1 according to the embodiment will be described. Note that the following description assumes that the channel search is executed for other than the first time.

In the broadcast reception apparatus 1 according to the embodiment, a channel search is executed automatically at a predetermined time. Note that this is merely one example, and a channel search may instead be started, for example, in response to an instruction from the input portion 14.

At a predetermined time, the broadcast reception apparatus 1 turns on automatically, and a channel search is started by the channel searching portion 1511 (step S101). The channel searching portion 1511, on finding a receivable physical channel as a result of the channel search, collects the channel information of the sub-channels of the receivable physical channel. Then, the channel information of the receivable channel (sub-channels) is stored, for example, in the RAM 153.

Next, with respect to the receivable channel detected by the channel searching portion 1511, the automatic channel-addition portion 1512 checks whether or not it is already stored in the channel memory 1541. In other words, the automatic channel-addition portion 1512 checks whether or not an unregistered channel is found (step S102). This is done by comparing the channel information stored in the RAM153 with the channel information stored in the channel memory 1541.

If no unregistered channel is found (No for step S102), it means that there is no channel to register automatically, and thus the operation ends (the power is turned off). On the other hand, if an unregistered channel is found (Yes for step S102), the automatic channel-addition portion 1512 checks whether or not the channel is a channel of which the registration has been canceled by a user (step S103). Specifically, with reference to the channel information stored in the erased-channel memory 1542, the automatic channel-addition portion 1512 checks whether or not the channel is a channel of which the registration has been canceled by a user.

If the channel is not a channel of which the registration has been canceled by the user (No for step S103), it is judged to be one to be additionally registered, and is registered automatically (step S104). Thereafter, the power of the broadcast reception apparatus 1 is turned off.

On the other hand, if the channel is a channel of which the registration has been canceled by the user (Yes for step S103), it means that it is not one to be additionally registered automatically, and thus the operation ends (the power is turned off) without the channel being added automatically.

As described above, with the broadcast reception apparatus 1 according to the embodiment, when there is an extra receivable channel, it is in principle additionally registered automatically. This makes it possible to appropriately cope with a broadcast station being set up etc. On the other hand, channels of which the registration has been canceled previously by a user are not registered again automatically. This makes it possible to overcome the inconvenience which users have felt conventionally.

It is to be understood that the embodiment described above is merely an example of the present invention, and is not meant to limit the present invention, which allows many variations and modifications within the scope not departing from the spirit of the invention.

For example, the above-described embodiment deals with a configuration in which a channel is in principle additionally registered automatically when a receivable but unregistered channel is found by a channel search. However, for a digital broadcast for example, when there is a change in the number of sub-channels, it is possible to obtain the channel information by analyzing the information contained in the TS. Thus, it is possible to detect the addition of a sub-channel without executing a channel search. It is therefore possible to configure the broadcast reception apparatus such that the channel so detected is registered automatically without the execution of a channel search. To broadcast reception apparatuses having a configuration as described above in which channels are registered automatically, the configuration of the present invention can be applied in which channels of which the registration has been canceled previously by a user are not additionally registered automatically.

The embodiment described above deals with a case of a digital broadcast. However, the present invention can also be applied to an analog broadcast, of course. In such a case, a judgment of whether a channel is an erased one or not may be done by use of channel information such as selection frequencies and the channel numbers of physical channels.

Moreover, the broadcast reception apparatus 1 according to the embodiment described above may be additionally provided with a function of, when a channel registered previously is found to be no longer receivable through a channel search, deleting the channel automatically. Even in this case, the effects described above can be obtained.

The present invention can be applied suitably to a broadcast reception apparatus that has a function of, on detection of a receivable but unregistered channel, additionally registering it as a receivable channel automatically. The skilled person will easily find other combinations of sub-combinations of the above described features of the broadcast reception apparatus without leaving the scope of the invention as defined in the claims.

## Claims

1. A broadcast reception apparatus comprising:
a receiving portion (11) receiving a broadcast signal;
an automatic channel-addition portion (1512) for, on detecting a receivable but unregistered channel, additionally registering the channel automatically;
an input portion (14) to which an instruction from a user is input; and
a channel-registration canceling portion (1513) for canceling a registration of a channel commanded, from the input portion (14), to be canceled as a receivable channel, and for storing in a memory portion (1542) channel information of the so canceled channel as information of a canceled channel,
wherein
when same channel information as the channel information of the unregistered channel is in the channel information stored in the memory portion (1542), the automatic channel-addition portion does not register the unregistered channel as a receivable channel.

2. The broadcast reception apparatus according to claim 1, further comprising:
a channel searching portion (1511) executing a search for a receivable channel by use of the receiving portion (11),
wherein execution of the channel search is accompanied by execution of processing by the automatic channel-addition portion (1512).

3. The broadcast reception apparatus according to claim 2,
wherein a channel search by the channel searching portion (1511) is executed automatically with predetermined timing.

4. The broadcast reception apparatus according to any one of claims 1 to 3,
wherein the broadcast signal is a digital broadcast signal, and the channel information is identification information given to, so as to be specific to, each channel by a broadcast station.
